# EUROPÄISCHE PATENTSCHRIFT

(11) **EP 3 309 812 B1**
(45) Veröffentlichungstag und Bekanntmachung des Hinweises auf die Patenterteilung: **30.01.2019**
(21) Anmeldenummer: 17195846.5
(22) Anmeldetag: 11.10.2017
(51) Int. Cl.: H01H 71/04, H02H 3/04, H02H 9/04, H01H 71/08, H01H 71/02

(54) **SAMMELFERNMELDEVORRICHTUNG**
COLLECTING BROADCASTING COMMUNICATION DEVICE
DISPOSITIF DE TÉLÉCOMMUNICATION COLLECTIVE

(30) Priorität: 11.10.2016 LU 93258
(43) Veröffentlichungstag der Anmeldung: 18.04.2018
(73) Patentinhaber: PHOENIX CONTACT GmbH & Co. KG, 32825 Blomberg (DE)
(72) Erfinder: Berg, Peter, 33189 Schlangen (DE); Pförtner, Steffen, 31832 Springe (DE)
(74) Vertreter: RCD Patent Giesen, Schmelcher & Griebel Patentwanwälte PartG mbB

(56) Entgegenhaltungen:
- EP-A1- 0 436 881
- EP-A1- 2 128 941
- DE-A1-102008 031 200
- DE-A1-102012 021 341

## Beschreibung

Die Erfindung betrifft eine Sammelfernmeldevorrichtung.

### Hintergrund der Erfindung

Aus verschiedensten Bereichen der Elektrotechnik ist es bekannt Überspannungsschutzgeräte, z.B. Überspannungsschutzgeräte für Netzschutzanwendungen, bereitzustellen.

Typischerweise weisen Überspannungsschutzgeräte eine lokale Statusanzeige auf. Einige Überspannungsschutzgeräte weisen zudem auch eine integrierte Fernmeldeeinrichtung auf, die Fehler an einen entfernten Ort meldet.

Beispielhaft sei auf die DE 10 2008 031 200 A1 verwiesen aus der ein Überspannungsschutzgerät bekannt ist. Das Überspannungsschutzgerät weist eine Fernmeldeschnittstelle auf, die über eine Steckbrücke kontaktierbar ist.

Aus der EP 2 128 941 A1 ist weiterhin ein Kupplungselement für aneinander-reihbare Überspannungsschutzgeräte zur dauerhaften Kopplung bekannt.

Allerdings wird zunehmend auch in anderen Bereichen, wie z.B. der Telekommunikation, der Mess-, Steuer- und Regeltechnik, der Überspannungsschutz nachgefragt.

Da in diesen Bereichen häufig komplexe Netzwerke aufgebaut werden, ist ein Wechsel von Überspannungsschutzgeräte im Laufenden Betrieb in aller Regel nicht möglich ohne den Stillstand einer Anlage in Kauf zu nehmen.

Daher ist der Anwender vor das Problem gestellt, dass er sich bei einer Erstinstallation entweder für Überspannungsschutzgeräte mit Fernmeldeeinrichtung oder ohne Fernmeldeeinrichtung entscheiden muss.

In der Vergangenheit wurden daher Systeme vorgeschlagen, bei denen die Überspannungsschutzgeräte mittels einer Lichtschranke abgetastet wurden, wobei bestimmte Zustände durch die Änderung der optischen Eigenschaften des Lichtstrahls der Lichtschranke signalisiert wurden.

Diese System erweisen sich jedoch als nachteilig, da sie zusätzlichen Bauraum seitlich der Überspannungsschutzgeräte - z.B. für Kopf- und/oder Zentralmodule - erforderten, sodass eine Nachrüstbarkeit z.B. in Schaltschränken nicht ohne weiteres realisierbar war und eine Neuverdrahtung unter Umständen erforderlich machte. Zudem bestand häufig das Problem, dass je nach Anordnung des Lichtpfades die Gefahr bestand, dass Kabel oder Staub in den Lichtpfad gelangte und so fehlerhafte Zustände signalisiert wurden.

Ausgehend von dieser Situation ist es Aufgabe der Erfindung eine Lösung bereitzustellen, die keinen Anlagenstillstand verursacht und es dem Anwender überlässt zu entscheiden, ob und wann er eine Fernmeldeeinrichtung einsetzen möchte.

Die Aufgabe wird gelöst durch eine Vorrichtung gemäß Anspruch 1. Weitere vorteilhafte Ausgestaltungen sind insbesondere Gegenstand der abhängigen Ansprüche.

Nachfolgend wird die Erfindung näher unter Bezug auf die Figuren erläutert. In diesen zeigt:
- Fig. 1: ein Überspannungsschutzgerät und ein Fernmeldemodul gemäß Ausführungsformen der Erfindung in einer perspektivischen schematischen Ansicht im nicht-verbauten Zustand,
- Fig. 2: das Überspannungsschutzgerät und das Fernmeldemodul gemäß Ausführungsformen der Erfindung in einer seitlichen schematischen Ansicht im nichtverbauten Zustand,
- Fig. 3: das Überspannungsschutzgerät und das Fernmeldemodul gemäß Ausführungsformen der Erfindung in einer seitlichen schematischen Ansicht im verbauten Zustand,
- Fig. 4: ein Detail von Fernmeldemodulen gemäß Ausführungsformen der Erfindung,
- Fig. 5: das Detail von Fernmeldemodulen gemäß Ausführungsformen der Erfindung zusammen mit Überspannungsschutzgeräten in einer frontalen schematischen Ansicht im verbauten Zustand,
- Fig. 6: ein weiteres Detail von Fernmeldemodulen gemäß Ausführungsformen der Erfindung zusammen mit einem Überspannungsschutzgerät in einer seitlichen schematischen Ansicht im verbauten Zustand im Betriebsfall,
- Fig. 7: das weiteres Detail von Fernmeldemodulen gemäß Ausführungsformen der Erfindung zusammen mit einem Überspannungsschutzgerät in einer seitlichen schematischen Ansicht im verbauten Zustand im Fehlerfall,
- Fig. 8: ein elektrisches Ersatzschaltbild gemäß Ausführungsformen der Erfindung, und
- Fig. 9: ein weiteres elektrisches Ersatzschaltbild gemäß Ausführungsformen der Erfindung.

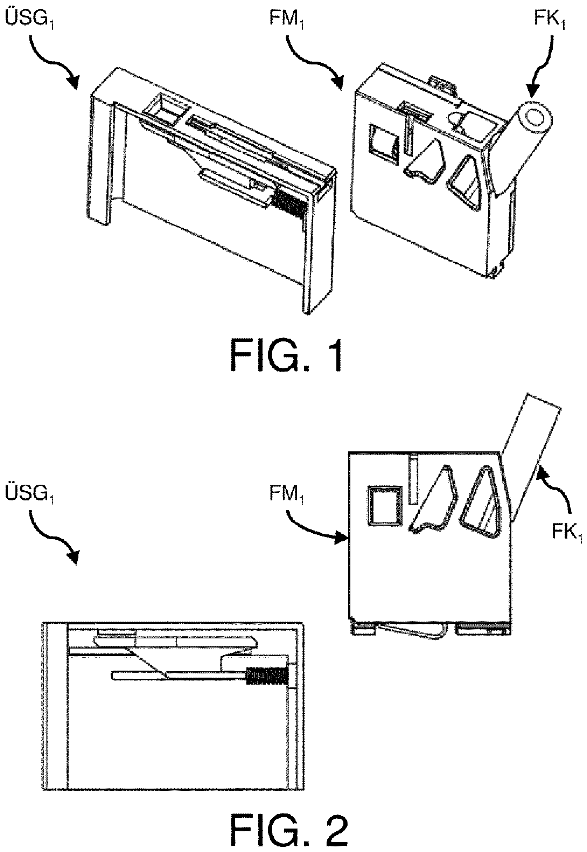

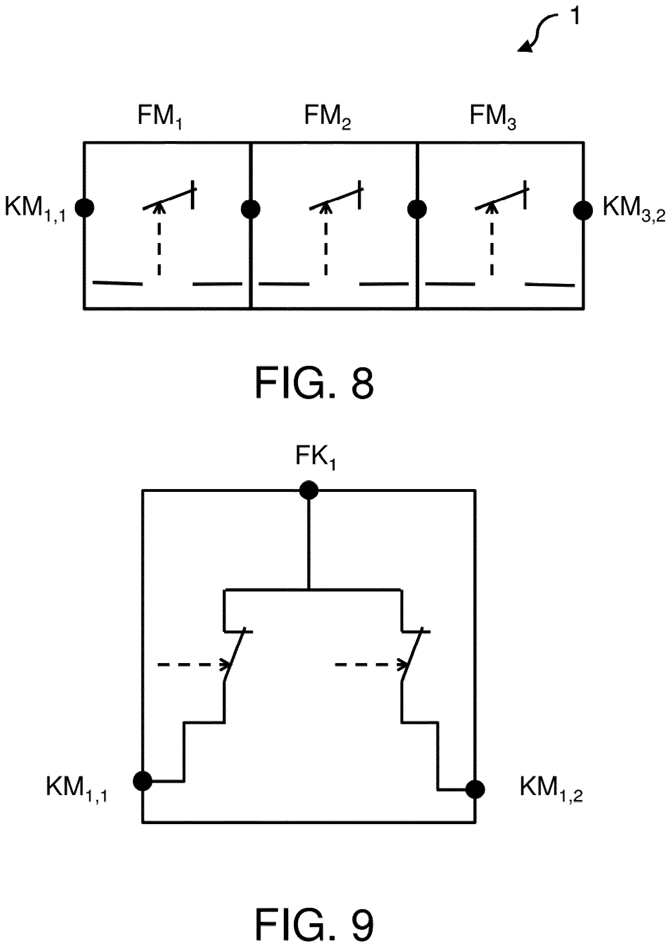

In Figur 1 ist ein aneinanderreihbares Überspannungsschutzgerät ÜSG₁ und ein Fernmeldemodul FM₁ gemäß Ausführungsformen der Erfindung in einer perspektivischen schematischen Ansicht im nicht-verbauten Zustand gezeigt. Eine Vielzahl von Überspannungsschutzgeräten und Fernmeldemodulen kann dann so verschaltet werden, dass eine elektrische Sammelfernmeldung - wie z.B. in Figur 8 gezeigt - realisiert werden kann.

Dabei weist jedes der Vielzahl von aneinanderreihbaren Überspannungsschutzgeräten ÜSG₁, ÜSG₂ Einrichtungen zum Aufbringen eines zugeordneten Fernmeldemoduls FM_{1,} FM₂ auf. Ebenso weist die Vielzahl von Fernmeldemodulen FM_{1,} FM₂ entsprechende Einrichtungen zum Aufbringen auf ein Überspannungsschutzgerät ÜSG₁, ÜSG₂ auf.

Beispielsweise ist in Figur 1 eine Ausführungsform zum Auf-/Ein-Schieben gezeigt, bei der korrespondierende Ausnehmungen mit entsprechenden Ausstülpungen kooperieren, sodass ein Fernmeldemodul auf eine Überspannungsschutzgerät nachträglich und unter Umständen lösbar aufgebracht werden kann.

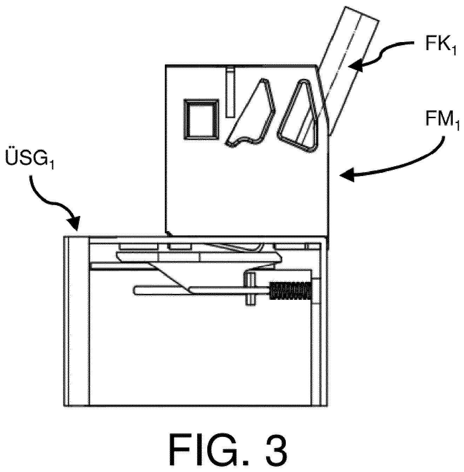

Dies ist in seitlicher Ansicht in den Figuren 2 und 3 in Bezug auf ein Überspannungsschutzgerät ÜSG₁ und ein zugeordnetes Fernmeldemodul FM₁ aufgezeigt, wobei die Zuordnung sich durch das Aufschieben auf eine Überspannungsschutzgerät ergibt. Besonders vorteilhaft ist es, wenn das Gehäuse des Überspannungsschutzgerätes ÜSG₁ und das Gehäuse des zugeordneten Fernmeldemoduls FM₁ wie in den Figuren dargestellt mit einander kooperieren, d.h. auf die jeweiligen Baumaße, z.B. gleiches Rastermaß, abgestimmt sind.

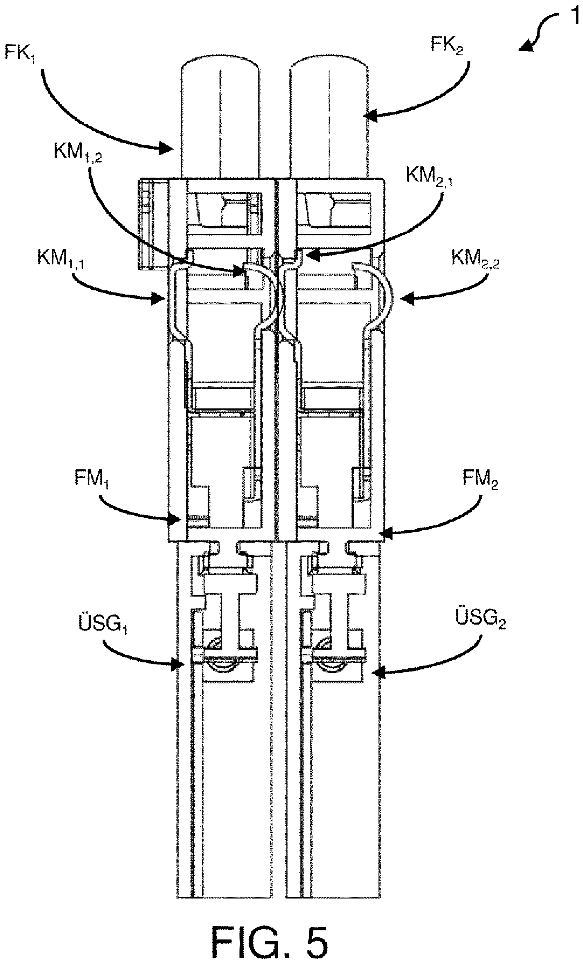

Wie in Figur 5 dargestellt sind die Fernmeldemodule FM_{1,} FM₂ ebenfalls aneinanderreihbar, wobei die Fernmeldemodule FM_{1,} FM₂ an den Seiten, die benachbart zu einem weiteren Fernmeldemodul FM₁, FM₂ sein können, elektrische Kontaktmittel KM_{1,1}, KM_{1,2;} KM_{2,1}, KM_{2,2} aufweisen, sodass benachbarte Fernmeldemodule FM₁, FM₂ in Reihe geschaltet werden können.

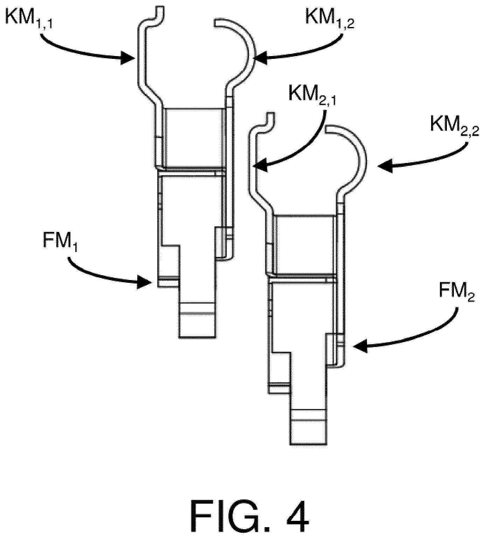

Hierzu können die Kontaktmittel z.B. als gebogenes Blechelement ausgebildet sein - siehe Figur 4 und Figur 5 - sodass seitlich eine kontaktfederartige Verbindung beim Aneinanderreihen entsteht. Hierzu kann z.B. das Kontaktmittel KM_{1,1}, KM_{2,1} auf einer Seite eher flach ausgebildet sein, während das Kontaktmittel KM_{1,2}"KM_{2,2} auf der anderen Seite eher rundlich ausgeformt ist, um federnd beim Aneinanderreihen auf den nächsten Kontakt aufzuliegen und so einen elektrische Kontakt herzustellen.

Werden eine Vielzahl von Fernmeldemodule so aneinander gereiht entsteht eine (unterbrechbare) elektrische Verbindung zwischen den Fernmeldemodulen, d.h. eine Reihenschaltung.

Im Fehlerfall eines Überspannungsschutzgerätes, z.B. ÜSG₂, wird das zugehörige Fernmeldemodul FM₂ die elektrische Reihenschaltung zu einem benachbarten Fernmeldemodul FM₁ oder mehreren benachbarten Fernmeldemodulen FM_{1,} FM₃ unterbrechen. Damit kann aus der Unterbrechung der elektrischen Verbindung ein Signal abgeleitet werden, dass die Unterbrechung an einer oder mehreren Stellen anzeigt.

Da die Fernmeldemodule FM_{1,} FM₂, FM₃ nachträglich auf die Überspannungsschutzgeräte ÜSG₁, ÜSG₂, ÜSG₃ aufgebracht werden können, ist nun eine Nachrüstung ohne Aufwand nachträglich möglich. Zudem muss eine vorhandene Verkabelung nicht entfernt werden und es wird zudem kein seitlicher Bauraum benötigt.

In einer vorteilhaften Ausgestaltung weisen die Einrichtungen zum Aufbringen Rastmittel auf. Hierdurch kann eine sichere (und je nach Ausgestaltung auch wieder lösbare) Verbindung von Überspannungsschutzgerät und Fernmeldemodul bereitgestellt werden. Dies ist z.B. in Umgebungen mit Vibrationen von Vorteil, da dann ein unbeabsichtigtes Lösen (und damit Trennen der elektrischen Reihenschaltung) des Fernmeldemoduls verhindert werden kann. In Ausführungsformen der Erfindung verfügt das Überspannungsschutzgerät ÜSG_{1,} ÜSG₂ beispielsweise über zumindest je ein mechanisches Anzeigemittel Z₁, die im Fehlerfall zu einer Änderung der Anzeige führen.

Beispielsweise wird eine mechanische Zunge Z₁ verschoben, sodass sich ein Anzeigefenster ändert. Die Fernmeldemodule FM₁, FM₂ können dann z.B. Mittel zum Abtasten T₁ der mechanischen Anzeigemittel eines zugeordneten Überspannungsschutzgerät ÜSG₁, ÜSG₂ aufweisen. Das Mittel zum Abtasten kann z.B. federnd in ein Anzeigefenster eingreifen und von der mechanischen Zunge im Fehlerfall angehoben/verschoben werden und so den elektrischen Kontakt im Fernmeldemodul unterbrechen. Z.B. kann das Mittel zum abtasten direkt auf eine elektrische Zunge im Fernmeldemodul einwirken, sodass der elektrische Kontakt zwischen den seitlich angeordneten Kontaktmitteln eines Fernmeldemoduls unterbrochen wird.

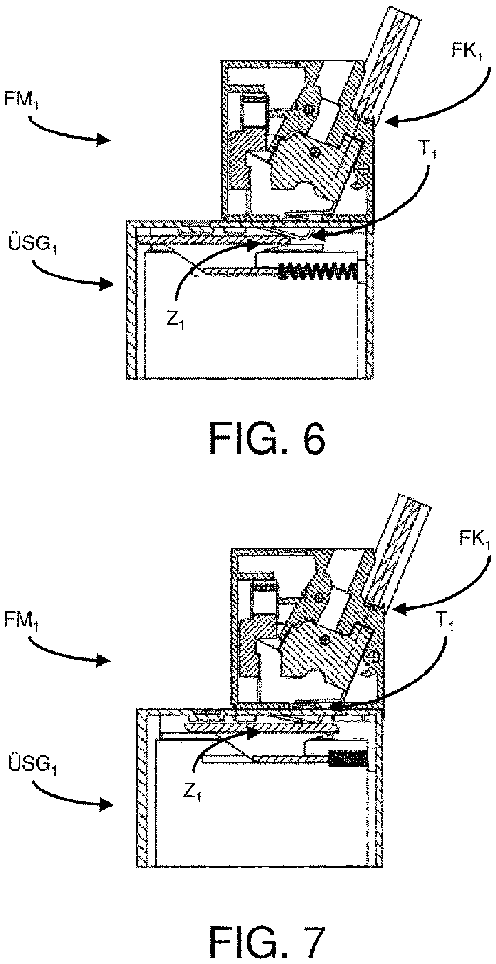

D.h. es kann eine einfache mechanische Abtastung eines mechanischen Anzeigers mit dem Fernmeldemodul verkoppelt sein. Alternativ oder zusätzlich kann natürlich auch vorgesehen sein, dass z.B. ein elektrischer Kontakt vom jeweiligen Überspannungsschutzgerät zum Fernmeldemodul zur Verfügung gestellt wird, mit dem die elektrische Verbindung der Fernmeldemodule unterbrochen werden kann. Dies ist beispielhaft in den Figuren 6 im Betriebsfall und in Figur 7 im Fehlerfall dargestellt. D.h. eine einfache mechanische Anzeige kann im Falle des Betriebes ohne Fernmeldemodul optisch ausgewertet werden und im Falle der Verwendung eines Fernmeldemoduls kann die Anzeige "mechanisch" ausgewertet werden. D.h. mittels der mechanischen Auswertung wird der Verdrahtungsaufwand minimiert.

Wie in den Figuren 1-3, 5-7 und 8 dargestellt kann zudem vorgesehen sein. Dass z.B. ein erstes Fernmeldemodul FM₁ über ein weiteres Anschlussmittel FK₁ verfügt und ein zweites Fernmeldemodul FM₂ ebenfalls über ein weiteres Anschlussmittel FK₂ verfügt, um eine frontseitige elektrische Verbindung zu den jeweiligen Kontaktmitteln KM_{1,1}, KM_{1,2;} KM_{2,1}, KM_{2,2} des jeweiligen Fernmeldemoduls FM_{1,} FM₂ zur Verfügung zu stellen. D.h. mit der vorgestellten Maßnahme kann eine einfache Zuführung / Ableitung der Reihenschaltung zur Verfügung gestellt werden, die keine seitliche elektrische Kontaktierung benötigt.

Zudem kann so auch durch Verbinden von unterschiedlichen Reihen eine Sammelfernmeldung über verschiedene Reihen eines Schaltschrankes oder auch über Lücken in einer Reihe hinaus ermöglicht werden. D.h., die vorgestellte Lösung ist hochflexibel und kostengünstig.

Tritt nun ein Fehlerfall auf kann z.B. der Ort des Fehlers durch Abgreifen an den weiteren Anschlussmitteln schnell eingegrenzt werden, sodass sich die Fehlersuche als äußerst einfach erweist. Alternativ oder zusätzlich könnte natürlich auch eine Einzelabfrage mittels eines jeden weiteren Anschlussmittels realisiert werden.

Mittels der Erfindung werden auf die Überspannungsschutzgeräte ÜSE₁ aufbringbare / aufrastbare Fernmeldemodule FM₁ bereitgestellt, welches die Fernmeldefunktion mitsamt der Kontaktmitteln KM_{1,1}, KM_{1,2} bereitstellt.

Ein Fernmeldemodul FM₁ wird dabei mit einem Überspannungsschutzgerät ÜSE₁ verbunden, z.B. aufgerastet. Durch seitliche Kontaktmitteln KM_{1,1}, KM_{1,2} des Fernmeldemoduls FM₁ wird bei Aneinanderreihung mit einem oder mehreren weiteren Fernmeldemodulen FM₂, FM₃ die Verbindung zu Nachbarmodulen quasi automatisch hergestellt. Dabei werden die einzelnen Fernmeldekontakte durch die Aneinanderreihung in Reihe verschaltet. Vorteilhaft werden die jeweils äußersten Fernmeldemodule einer Reihe mit Anschlussleitungen kontaktiert. Dann sind alle zugeordneten Überspannungsschutzgeräte in die Sammelfernmeldung einbezogen.

Weiterhin verfügt das Fernmeldemodul über Federkontakte, die auf ein vorhandenes Anzeigeelement im Überspannungsschutzgerät aufliegen und im Betriebsfall dadurch geschlossen werden. Der geschlossene Zustand ermöglicht die Reihenschaltung zum Nachbarmodul.

Öffnet ein Federkontakt, z.B. durch Auslösen des Überspannungsschutzgerätes wird der Pfad getrennt, sodass die Reihenschaltung unterbrochen wird und der geänderte Status abgefragt werden kann.

### Bezeichnunasliste

- 1: Sammelfernmeldevorrichtung
- ÜSG₁, ÜSG₂, ÜSG₃: Überspannungsschutzgerät
- FM_{1,} FM₂, FM₃: Fernmeldemodul
- KM_{1,1}, KM_{1,2;} KM_{2,1}, KM_{2,2} , KM₂₃₁, KM_{3,2}: Kontaktmittel
- Z₁: mechanisches Anzeigemittel
- T: Mittel zum Abtasten
- FK₁, FK₂: weiteres Anschlussmittel

## Patentansprüche

1. Sammelfernmeldevorrichtung (1) für eine Vielzahl von aneinanderreihbaren Überspannungsschutzgeräten (ÜSG_{1,} ÜSG₂), wobei je Überspannungsschutzgerät (ÜSG₁, ÜSG₂) Einrichtungen zum Aufbringen eines zugeordneten Fernmeldemoduls (FM₁, FM₂) aufweisen, wobei ein Fernmeldemodul (FM₁, FM₂) entsprechende Einrichtungen zum Aufbringen auf ein Überspannungsschutzgerät (ÜSG_{1,} ÜSG₂) aufweist, wobei die Fernmeldemodule (FM₁, FM₂) ebenfalls aneinanderreihbar sind, **dadurch gekennzeichnet, dass** die Fernmeldemodule (FM₁, FM₂) an den Seiten, die benachbart zu einem weiteren Fernmeldemodul (FM₁, FM₂) sein können, Kontaktmittel (KM_{1,1}, KM_{1,2;} KM_{2,1}, KM_{2,2}) aufweisen, sodass benachbarte Fernmeldemodule (FM₁, FM₂) in Reihe geschaltet werden, wobei im Fehlerfall eines Überspannungsschutzgerätes (ÜSG₂) das zugehörige Fernmeldemodul (FM₂) die elektrische Reihenschaltung zu einem benachbarten Fernmeldemodul (FM₁) oder mehreren benachbarten Fernmeldemodulen unterbricht.

2. Sammelfernmeldevorrichtung nach Anspruch 1, wobei die Einrichtungen zum Aufbringen Rastmittel aufweisen.

3. Sammelfernmeldevorrichtung nach Anspruch 1 oder 2, wobei das Überspannungsschutzgerät (ÜSG₁, ÜSG₂) über mechanische Anzeigemittel (Z₁) verfügt, die im Fehlerfall zu einer Änderung der Anzeige führen, wobei die Fernmeldemodule (FM₁, FM₂) Mittel zum Abtasten (T₁) der mechanischen Anzeigemittel eines zugeordneten Überspannungsschutzgerät (ÜSG_{1,} ÜSG₂) aufweisen.

4. Sammelfernmeldevorrichtung nach einem der vorhergehenden Ansprüche, wobei ein erstes Fernmeldemodul (FM₁) über ein weiteres Anschlussmittel (FK₁) verfügt und ein zweites Fernmeldemodul (FM₂) ebenfalls über ein weiteres Anschlussmittel (FK₂) verfügt, um eine frontseitige elektrische Verbindung zu den jeweiligen Kontaktmitteln (KM_{1,1}, KM_{1,2;} KM_{2,1}, KM_{2,2}) des jeweiligen Fernmeldemoduls (FM₁, FM₂) zur Verfügung zu stellen.

## Claims

1. Collective remote signaling apparatus (1) for a plurality of overvoltage protection devices (ÜSG₁,ÜSG₂) that can be connected in series, wherein each overvoltage protection device (ÜSG₁, ÜSG₂) comprises devices for mounting an assigned remote signaling module (FM₁, FM₂), wherein a remote signaling module (FM₁, FM₂) comprises corresponding devices for mounting on an overvoltage protection device (ÜSG₁,ÜSG₂), wherein the remote signaling modules (FM₁, FM₂) can also be connected to others in series, **characterized in that** the remote signaling modules (FM₁, FM₂) comprise contact means (KM_{1,1}, KM_{1,2}; KM_{2.1}, KM_{2.2}) on the sides which can be adjacent to another remote signaling module (FM₁, FM₂), so that adjacent remote signaling modules (FM₁, FM₂) are connected in series, wherein in the event of a fault in an overvoltage protection device (ÜSG₂) the associated remote signaling module (FM₂) interrupts the electrical series connection to an adjacent remote signaling module (FM₁) or a plurality of adjacent remote signaling modules.

2. Collective remote signaling apparatus according to Claim 1, wherein the devices for mounting comprise latching means.

3. Collective remote signaling apparatus according to Claim 1 or 2, wherein the overvoltage protection device (ÜSG₁,ÜSG₂) has mechanical display means (Z₁), which in the event of a fault give rise to a change in the display, wherein the remote signaling modules (FM₁, FM₂) comprise means for scanning (T₁) the mechanical display means of an assigned overvoltage protection device (ÜSG₁, ÜSG₂).

4. Collective remote signaling apparatus according to any of the previous claims, wherein a first remote signaling module (FM₁) comprises an additional connection means (FK₁) and a second remote signaling module (FM₂) also comprises a further connection means (FK₂), in order to provide a front-side electrical connection to the respective contact means (KM_{1,1}, KM_{1,2}; KM_{2.1}, KM_{2.2}) of the respective remote signaling module (FM₁, FM₂).

## Revendications

1. Dispositif de télécommunication collectif (1) pour une pluralité d'appareils de protection contre les surtensions (ÜSG₁, ÜSG₂) juxtaposables, chaque appareil de protection contre les surtensions (ÜSG1, ÜSG₂) comportant des systèmes destinés au montage d'un module de télécommunication (FM₁, FM₂) associé, un module de télécommunication (FM₁, FM₂) comportant des systèmes correspondants pour le montage sur un appareil de protection contre les surtensions (ÜSG₁, ÜSG₂), les modules de télécommunication (FM₁, FM₂) étant également juxtaposables, **caractérisé en ce que** sur les côtés qui peuvent être voisins à un autre module de télécommunication (FM₁, FM₂), les modules de télécommunication (FM₁, FM₂) comportent des moyens de contact (KM_{1,1}, KM_{1,2;} KM_{2,1}, KM_{2,2}), de sorte que des modules de télécommunication (FM₁, FM₂) soient montés en série, en cas de défaut d'un appareil de protection contre les surtensions (ÜSG₂), le module de télécommunication (FM₂) associé interrompant le montage électrique en série vers un module de télécommunication (FM₁) voisin ou vers plusieurs modules de télécommunication voisins.

2. Dispositif de télécommunication collectif selon la revendication 1, les systèmes pour le montage comportant des moyens d'enclenchement.

3. Dispositif de télécommunication collectif selon la revendication 1 ou 2, l'appareil de protection contre les surtensions (ÜSG₁, ÜSG₂) disposant de moyens d'affichage (Z₁) mécaniques, qui en cas de défaut mènent à une modification de l'affichage, les modules de télécommunication (FM₁, FM₂) comportant des moyens de balayage (T₁) des moyens d'affichage mécaniques d'un appareil de protection contre les surtensions (ÜSG₁, ÜSG₂) associé.

4. Dispositif de télécommunication collectif selon l'une quelconque des revendications précédentes, un premier module de télécommunication (FM₁) disposant d'un moyen de raccordement (FK₁) supplémentaire et un deuxième module de télécommunication (FM₂) disposant également d'un moyen de raccordement (FK₂) supplémentaire, pour mettre à disposition une liaison électrique frontale vers les moyens de contact (KM_{1,1}, KM_{1,2} ; KM_{2,1}, KM_{2,2}) en question du module de télécommunication (FM₁, FM₂) concerné.
